Europäisches Patentamt

European Patent Office

Office européen des brevets

(19)

(11) Publication number: **0 178 032**
**B1**

# EUROPEAN PATENT SPECIFICATION

(12)

(45) Date of publication of the patent specification:
24.08.88

(51) Int. Cl.⁴: **C 03 B 37/014, B 08 B 15/04**

(21) Application number: **85201655.9**

(22) Date of filing: **22.04.83**

(60) Publication number of the earlier application in accordance with Art. 76 EPC: **0105926**

(54) **Vapor-phase axial deposition system.**

(30) Priority: 26.04.82 US 371629
26.04.82 US 371628
26.04.82 US 371630

(43) Date of publication of application:
16.04.86 Bulletin 86/16

(45) Publication of the grant of the patent:
24.08.88 Bulletin 88/34

(84) Designated Contracting States:
BE CH DE FR LI NL SE

(56) References cited:
GB - A - 2 059 944
US - A - 1 820 530

(73) Proprietor: AMERICAN TELEPHONE AND TELEGRAPH COMPANY, 550 Madison Avenue, New York, NY 10022 (US)

(72) Inventor: Andrejco, Matthew Julius, R.D. 2, 203 Hanover Drive, Wrightstown New Jersey 08562 (US)
Inventor: Potkay, Eugene, 1015 Hughes Drive Apartment 17, Hamilton Square New Jersey 08690 (US)

(74) Representative: Johnston, Kenneth Graham et al, AT&T (UK) LTD. AT&T Intellectual Property Division 5 Mornington Road, Woodford Green Essex, IG8 OTU (GB)

# Description

This invention relates to the fabrication of a lightguide preform using vapor-phase axial deposition techniques.

Lightguide fiber is drawn from a solid glass cylinder or preform. One particular technique for fabricating such a preform is described in U.S. Patent 4 062 665 to Izawa et al., which issued December 13, 1977, and is commonly referred to as the vapor-phase axial deposition (VAD) method.

The VAD technique uses a refractory starting member projecting axially into the central portion of an elongated cylindrical chamber. The member rotates along its axis of rotation, which is coincident with the chamber axis, as it is withdrawn therefrom. A glass raw material is introduced into a high temperature portion of a flame near the tip of a stationary torch producing a glassy particulate or soot which is directed onto the end of the rotating refractory starting member. A substantially cylindrical boule of porous soot is formed on the starting member as it is continuously withdrawn from the chamber at a rate equal to the growth rate of the soot upon the boule. The withdrawn soot boule is then subjected to an elevated temperature to consolidate the porous material into a solid, clear cylindrical lightguide preform. Such a technique has been found capable of fabricating lightguide preforms from which low loss lightguide fiber has been drawn.

GB-A-2 059 944 discloses a VAD method of fabricating an optical fiber preform. The latter is formed on a rotating rod which is withdrawn vertically from a reaction vessel. Exhaust gases from the vessel are withdrawn via a straight sided cylindrical exhaust part mounted in the wall of the vessel. The precharacterising part of claim 1 is known from this document. However, several problems are present with presently known systems to perform the VAD method.

It has been observed, for example, that the torch flame in the prior known systems tends to wander and flicker. This results in an inefficient and nonuniform deposition of the soot, loss of reactant materials, and a lack of repeatability between runs.

According to the present invention there is provided an exhaust system for exhausting soot from a deposition chamber in which a light guide soot boule is to be formed by vapor-phase axial deposition, the exhaust system comprising a substantially cylindrical exhaust tube connected to the deposition chamber, characterised in that the exhaust tube has a flared intake end with a gradually turned back lip projecting into the chamber, an output end connected to one end of an exhaust line, and a constricted or throat portion intermediate the intake end and the output end.

We have discovered that flickering of the torch flame can be reduced by each of several techniques. One technique which is described and claimed in EP-A-0 105 926 (M.J. Andrejco 3/4–1/2/3) filed on even date herewith is the use of a deposition chamber so shaped to avoid the presence of dead spaces which would otherwise give rise to non-constant gas movement within the chamber, and cause flame flicker. Another technique is the use of the particular shaped exhaust tube of the present invention.

Fig. 1 is an isometric view of the inventive VAD chamber;

fig. 2 is an isometric view of a soot torch used in the VAD chamber;

fig. 3, 4 and 5 are isometric views of the innermost, intermediate and outer tubes of the torch;

fig. 6 is a cross-sectional view of the soot torch;

fig. 7, 8 and 9 are exemplary end configurations of the soot torch;

fig. 10 is a schematic view of the VAD system;

fig. 11 is a side view of an exhaust tube, and

fig. 12 is a cross-sectional view of a soot collection chamber used in the exhaust system.

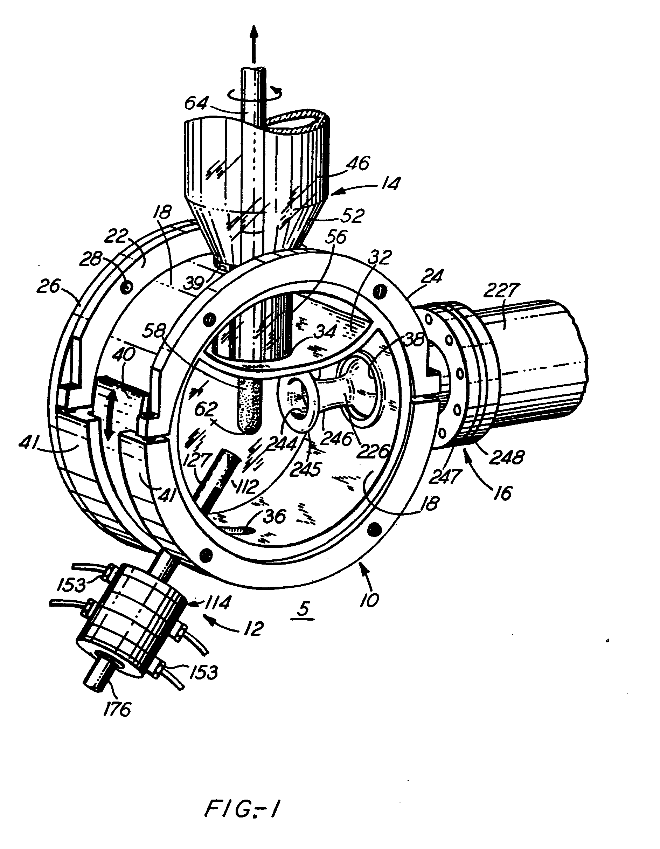

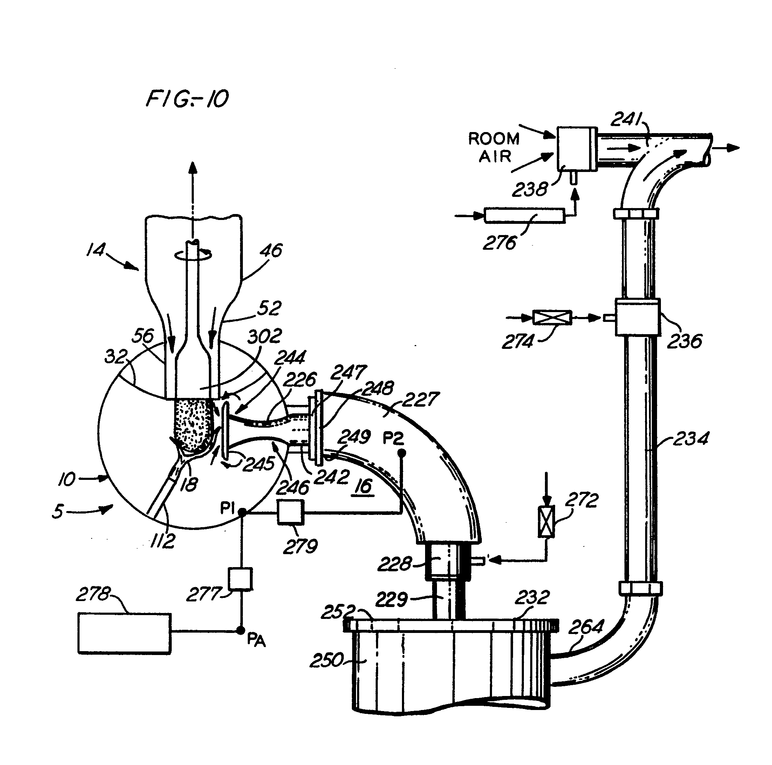

Fig. 1 is an isometric view of the instant VAD system, generally referred to by the numeral 5, comprised of a housing 10, a torch 12, an input section 14 and an exhaust system 16 (also see fig. 10).

The housing 10 has a short cylindrical body 18 with front an rear flanges 22 and 24, respectively. The diameter of the cylindrical body 18 is greater than the length thereof. A substantially planet, circular, coverplate 26 is removably rastened to the rear flange 24 by bolts 28–28. A similar coverplate (not shown) is also fastened to the front flange 24 during operation. An arcuate shaped baffle 32 having an opening 34 therein is mounted within the housing 10. The body 18 has an elongated slot 36 and first and second ports 38 and 39, respectively, therethrough. An arcuate plate 40 is slidably positioned between opposed guide members 41–41 and the cylindrical body 18.

The input section 14 is comprised of a hollow, cylindrical member 46, a tapered section 52 and a hollow, small diameter section 56 which passes through the port 39, and terminates at the opening 34 in the baffle 32. A starting member 58 which may be a hollow glass tube having a rounded end portion 62 (e.g., a test tube) is removably connected to a rotatable rod 64 which can move towards or away from the center of the housing 10.

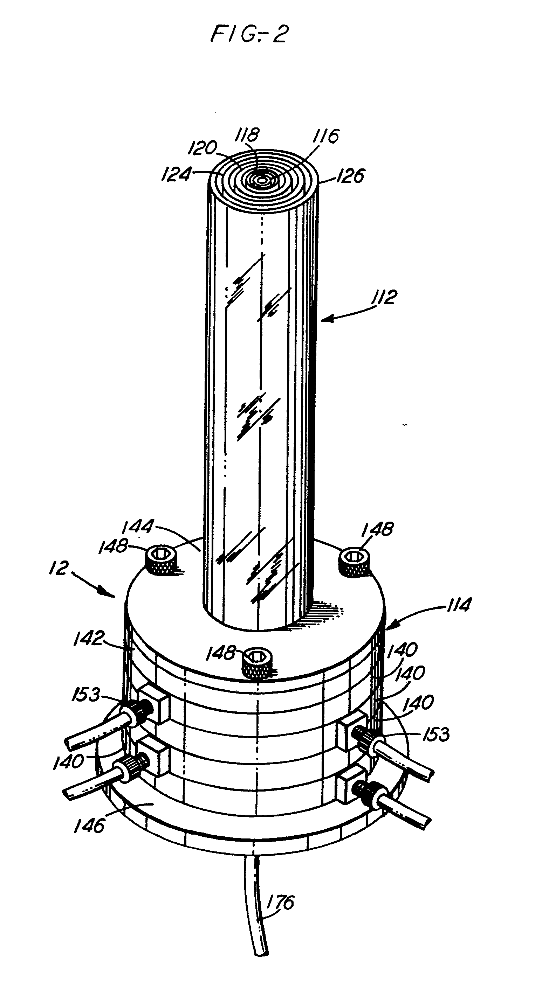

The torch 12 is comprised of a nozzle 112 and a base 114. The nozzle 112 is comprised (fig. 2) of an inner glass tube 116, a plurality of intermediate glass tubes 118, 120 and 124 and an outer glass tube 126 all of which are concentrically mounted one inside the other. Additionally, a large diameter cylinder or shroud 127 (fig. 1) is slidably mounted on the outer glass tube 126 and extends beyond the end of the nozzle 112. The axial position of the shroud 127 is adjustable to alter the focusing of the flame emanating from the nozzle 112 during the soot deposition process.

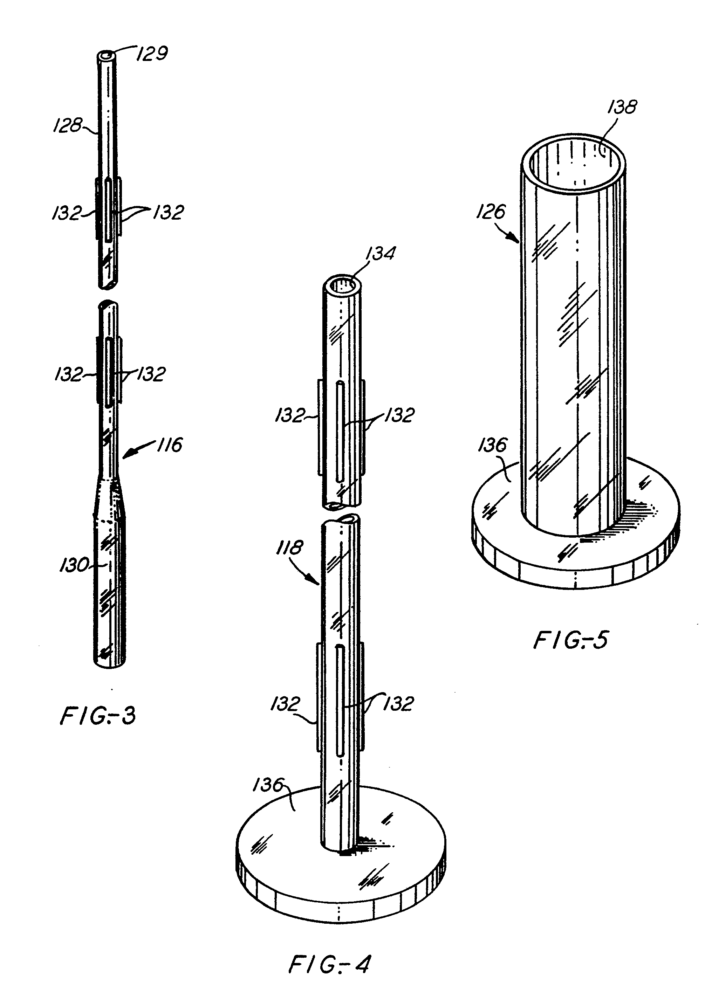

The inner tube 116, as can be seen in fig. 3, is comprised of a first elongated, small diameter, section 128 having a bore 129 and a large diameter section 130. A plurality of splines 132–132 are fixedly mounted and equally spaced about the periphery of the section 128. The splines can comprise glass rods bonded to the tubing section 128.

Each of the intermediate tubes 118, 120 and 124 is substantially the same, but of different diameters. Accordingly, only the tube 118 (see fig. 4) is described in detail. The tube 118 has a substantially uniform diameter bore 134, a plurality of fixedly mounted, equally spaced splines 132–132 on the periphery thereof and a radially extending flange 136 on one end thereof.

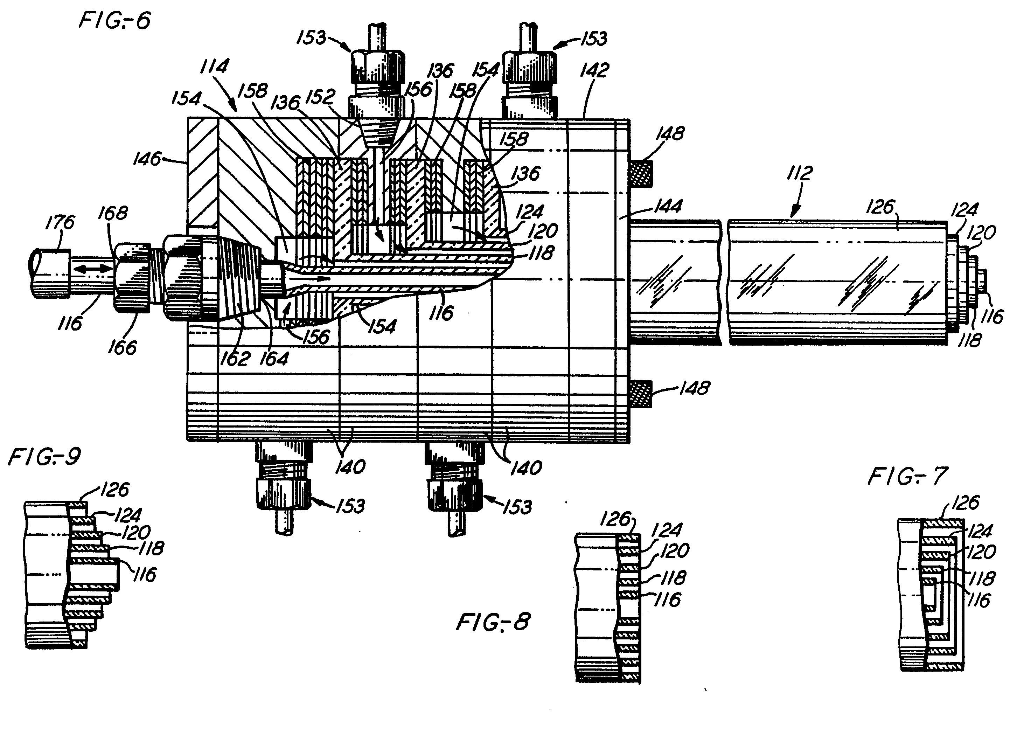

The outer tube 126 (see fig. 5) is similar to the intermediate tubes 118, 120 and 124, having a large diameter bore 138, but not having any splines on the outer surface thereof. A flange 136 radially extends from one end thereof.

The concentrically mounted tubes 116, 118, 120, 124 and 126 extend into, and are held in place by, the base 114 as can be seen in the cross-sectional view of fig. 6. The base 114 is comprised of a plurality of annular support members 140–140 and an annular top member 142. The support members 140–140 and the top member 142, which may be a Teflon polymer material or the like, are held between a top plate 144 and a bottom plate 146 by a plurality of threaded rods 148–148 which pass therethrough and are screwed into the bottom plate 146. Each of the members 140–140 has an opening 152 into the wall thereof to threadably receive a gas line connector 153. Each of the openings 152–152 communicates with a respective one of a plurality of inner annular chambers 154–154 via a respective one of a plurality of channels 156–156. A plurality of washer shaped spacers 158–158 are located between respective flanges 136–136 of the intermediate tubes 118, 120 and 124 and the outer tube 126. A ferrule 162 having an axial passageway 164 therethrough is threadably inserted into the lowermost support member 140 while a locking nut 166 having an opening 168 therein is threadably positioned thereon.

As shown, the intermediate tubes 118, 120 and 124 are inside, and concentric with, the outer tube 126. The splines 132–132 have an accurately machined thickness which maintains a predetermined, spaced relation between said tubes. The flanges 136–136 are positioned between the ring support members 140–140. Additionally, the annular shaped spacers 158–158 are located between each flange 136. Advantageously, the number of spacers 158–158 between each flange 136 may be readily changed in order to alter the height of one or more of the tubes relative to the other tubes. Thus, the end configuration of the nozzle 112 may be readily rearranged resulting in various configurations, three of which are shown in fig. 7, 8 and 9.

In addition to the ability to alter the configuration of the exhaust end of the nozzle 112, the positioning of the inner tube 116 can be adjusted by moving it forwardly or back through the ferrule 162 and then locking it in place by means of the lock nut 166.

The exhaust system 16 is shown in fig. 10 and is comprised of the serial combination of an exhaust tube 226, an outlet pipe 227, a first injection venturi 228, a soot collection chamber 232 and a discharge line 234 with a second injection venturi 236 therein. A third injection venturi 238 is connected to an air intake line 241 which joins the discharge line 234 for connection to an exhaust hood (not shown).

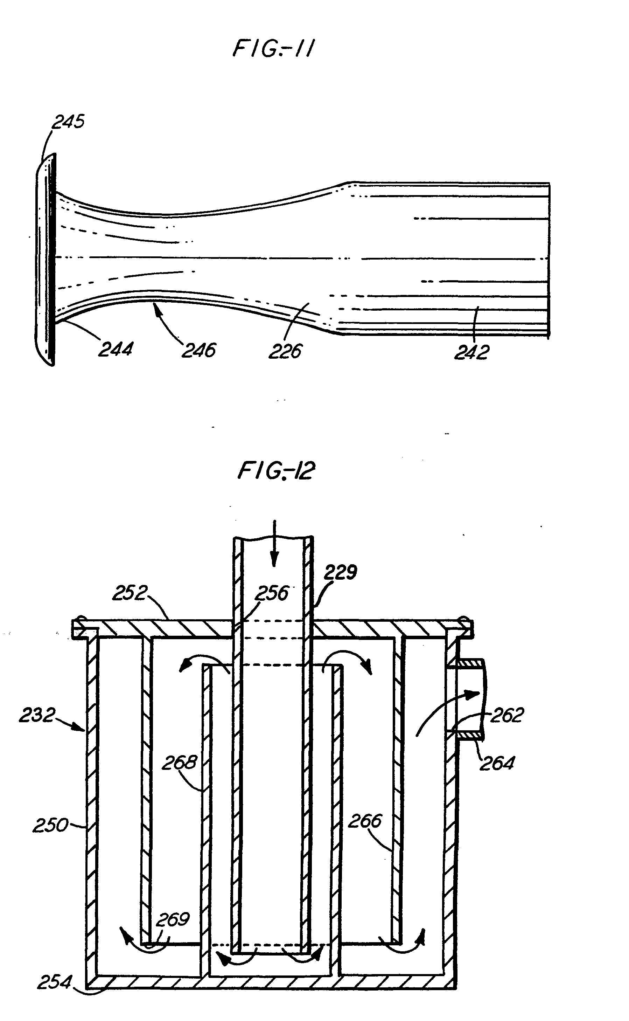

The exhaust tube 226 (see fig. 11) has a substantially hollow cylindrical output end 242 and a flared intake 244 having a gradually turned back lip 245. The tube 226 has a constricted throat section 246 intermediate the output end 242 and the intake 244.

The output end 242 of the exhaust tube 226 is fixedly positioned in a mounting plate 247 (fig. 10). The mounting plate 247 is sealably fastened to a flange 248 on a first end 249 of the outlet pipe 227.

The soot collection chamber 32, shown in cross section in fig. 12, is comprised of a cylindrical housing 250 having top and bottom plates 252 and 254, respectively. The top plate 252 has an opening 256 through which a connecting pipe 229 from the venturi 28 passes and projects into the central portion of the chamber 32. The housing 250 also has an opening 262 therein to receive a first end 264 of the discharge line 234. First and second concentric cylinders 266 and 268 are mounted within the housing 250. The first cylinder 266 is fixedly attached to, and depends from, the top plate 252 and has an unattached end 269 in spaced relation with the bottom plate 254. The second cylinder 268 is fixedly mounted on the bottom plate 254, within the first cylinder 266, and projects upward, towards and in spaced relation to, the top plate 252.

The injection venturies 228, 236 and 238 are of the known in-line, injection type manufactured, for example by the Nortel Machine Company, Buffalo, New York, USA (model AM-1500, glass filled Teflon polymer). Filtered compressed air is supplied to each injection venturi 228, 236 and 238 by controlled flow air pumps 272, 274 and 276, respectively. As generally known, such injection venturies operate to control the rate of gas flow therethrough in response to the supplied rate of compressed air, and are useful to control the pressure profile along gas flow lines.

In the present arrangement, the operation of the injection venturi 236 influences the pressure measured at $P_1$, in the housing 10, while the injection venturi 228 influences the differential pressure between the housing at $P_1$ and the outlet pipe 227 at $P_2$. Based upon the measurement of the differential pressure, the air pump 274 is adjusted until the desired pressure (e.g., standard atmosphere 760 mm Hg) in the housing 10 is achieved. A pressure measuring apparatus 277 references ambient room pressure $P_A$ which is monitored by a barometer 278. The differential pressure $(P_1–P_2)$, monitored by a pressure gauge 279 is nominally selected to a predetermined pressure by adjusting the air pump 272 which controls the flow of gas through the injection venturi 228. The injection venturi 238 is also useful to control the overall pressures in the exhaust line 234.

The meters 277 and 279 and the barometer 278 can be of known type and can provide outputs connected to a computer control (not shown) which provides a feedback signal to the air pumps 272, 274 and 276 to control the flow of air to the ventures 228, 236 and 238 to continuously control the pressure within the system 16 and the housing 10.

In operation (see fig. 1 and 10), the arcuate plate 40 is moved within the guide members 41–41 to position the axis of the nozzle 112 of the torch 12 at a predetermined angle (e.g., 35°) to the axis of the starting member 58 with the nozzle directed at the end portion 62 thereof.

Gaseous reactants such as $SiCl_4$; $GeCl_4$; $POCl_3$ or the like, in an argon carrier gas, flow from a source, not shown, into a flexible tube 176 and through the inner tube 116 as shown in fig. 6. Other gases are caused to flow through the channels 156–156 into their respective chambers 154–154 and out the discharge end of the nozzle 112. Gases such as $SiCl_4$ flow between the tubes 116 and 118, hydrogen flows between the tubes 118 and 120, argon flows between tubes 120 and 124 while oxygen flows between tubes 124 and 126.

The selection of the various gases, the flow rates thereof, and the like, to produce the soot boule 62 is in accordance with prior known technology.

The nozzle produces a soot which is deposited to form a rotating boule 302 as shown in fig. 10. The soot boule 302 is simultaneously rotated and withdrawn from the VAD system 5 through the input section 14. Inert gas is directed into the chamber 5 between the surfaces of the growing porous boule 302 and the inner surface of the small diameter section 56 of the input section 14 as indicated by the arrows. The intake 244 of the exhaust tube 226 is located proximate the rotating soot boule 302. The undeposited soot and gases are drawn into and through the exhaust tube 226.

It has been found that the flared intake 244 with the gradually turned back lip 245 is effective in removing undeposited soot from behind the flared intake as indicated by the arrows. Additionally, the gradually turned back lip 245 substantially eliminates turbulence of gases at the intake 245 which further enhances soot desposition on the boule 302.

The constricted section 246 of the exhaust tube 226 accelerates the flow of the combustion byproducts and undeposited soot extracted from the deposition chamber 5 and as a consequence, produces a forward pressure drop, e.g., 1.2 mm Hg, between the chamber and the outlet pipe 227.

The exhausted gases and undeposited soot pass from the exhaust tube 226, through the outlet pipe 227 and the injection venturi 228 into the soot collection chamber 232. The chamber 232 performs the dual function of extracting soot from the exhaust stream while providing some degree of isolation between the housing 10 and downstream pressure fluctuations. The soot collection chamber 232 (see fig. 12) provides a serpentine path for the soot and exhaust gases directed therein. The exhaust gases and soot are directed axially into the chamber 232 through the pipe 229. The exhaust gases exiting the inlet pipe 229 expand radially outward and move upward, toward the top plate 252 where the gas again expands. This process is repeated until the gases are finally exhausted through the opening 262 and pass into the discharge line 234. The heavier soot particles deposit on the bottom plate 254 while lighter particular deposit on the surfaces of the cylinders 266 and 268 as well as the inside wall of the housing 250.

The gases, with any soot residue therein are moved through the discharge line 234 (see fig. 10), under control of the injection ventures 236 and 238, and exit into an exhaust hood (not shown).

It has been found that the configuration of the housing 10 substantially eliminates large secondary gas circulation cells (i.e., chamber spaces providing unequal heating and cooling of the various gases thereby giving rise to non-uniform or non-constant gas flow patterns). Such elimination of secondary gas circulation cells appears to be due to the confinement imposed by the limited depth of the housing 10. The ratio of the diameter of the housing 10 to the housing depth should be greater than 1.5:1 while the ratio of the housing depth to the diameter of the soot boule 302 is less tan 3:1. In one embodiment, the diameter of the housing 10 is 25 cm, the depth is 12 cm, and the boule diameter is 5 cm.

Additionally, as shown in fig. 1, the elongted axes of the nozzle 112, the boule 62, and the exhaust tube 226 are disposed in a common plane. This further reduces secondary gas circulation.

The foregoing deposition chamber arrangement and exhaust system, it is found, results in a gas flow pattern that substantially eliminates flame flicker and wander resulting in a soot deposition process in which the deposition rate, the density of the soot boule, the boule growth rate and the shape of the deposition surface are reproducible to a degree not heretofore attainable.

The housing 10, the baffle 32, the end plates 26–26, the input section 14 and the exhaust tube 226 are fabricated from Pyrex glass. However, various other glasses or metallic materials may be used.

## Claims

1. An exhaust system for exhausting soot from a deposition chamber (10) in which a light guide soot boule is to be formed by vapor-phase axial deposition, the exhaust system comprising a substantially cylindrical exhaust tube (226) connected to the deposition chamber, characterised in that the exhaust tube has a flared intake end (244) with a gradually turned back lip projecting into the chamber, an output end (242) connected to one end (249) of an exhaust line (227), and a constricted or throat portion (246) intermediate the intake end and the output end.

2. A system according to claim 1, characterised in that a soot collection chamber (232) is connected to the other end of the exhaust line (227), the colleciton chamber serving to isolate the deposition chamber (10) from downstream pressure fluctuations.

3. A system according to claim 2, characterised in that the colleciton chamber (232) comprises a plurality of tubular members (266, 268) concentrically mounted in a longitrudinally positioned manner to provide a circuitous exhaust path.

4. A system according to claim 3, characterised in that the exit part (262, 264) of the collection chamber (232) is connected to another exhaust line (234).

5. A system according to claim 4, characterised in that an in-line injection venturi (228) is provided in the first mentioned exhaust line (227) to provide a differential pressure between the deposition chamber (10) and the first line.

6. A system according to claim 5, characterised in that another in-line injeciton venture (236) is provided in the other exhaust line (234) in order to adjust the pressure (P1) in the deposition chamber (10).

7. A system according to claim 6, characterised in that a further venturi (238) is provided in the said other line (234) to control the overall pressure in the exhaust system.

8. A system according to claim 1, characterised in that the exhaust tube (226) is located in the opposite side of the soot boule (302) to a torch (112) for projecting gaseous reactants to the soot boule.

9. A system according to claim 8, characterised in that the flared intake end (244) of the exhaust tube (226) is positioned closely adjacent to the end of the soot boule (302).

## Patentansprüche

1. Absaugsystem zum Absaugen von Soot aus einer Niederschlagskammer (10), in der ein Lichtleiter-Sootkörper durch axialen Niederschlag aus der Dampfphase herzustellen ist, wobei das Absaugsystem ein mit der Niederschlagskammer verbundenes, im wesentlichen zylindrisches Absaugrohr (226) aufweist, dadurch gekennzeichnet, dass das Absaugrohr versehen ist mit einem, sich in die Kammer erstreckenden, sich konisch erweiternden Einlassende (244) mit einer sich allmählich nach rückwärts krümmenden Lippe, einem an ein Ende (249) einer Absaugleitung (227) angeschlossenen Auslassende (242) und einem zwischen Einlass- und Auslassende gelegenen eingeschnürten oder Hals-Teil (246).

2. System nach Anspruch 1, dadurch gekennzeichnet, dass mit dem anderen Ende der Absaugleitung (227) eine Sootsammelkammer (232), die zur Entkopplung der Niederschlagskammer (10) von stromabwärtigen Druckfluktuationen vorgesehen ist, vorhanden ist.

3. System nach Anspruch 2, dadurch gekennzeichnet, dass die Sammelkammer (232) eine Vielzahl rohrförmiger Glieder (266, 268) aufweist, die konzentrisch in longitudinalen Positionen zum Erhalt eines weitläufigen Absaugweges montiert sind.

4. System nach Anspruch 3, dadurch gekennzeichnet, dass der Auslassteil (262, 264) der Sammelkammer (232) mit einer weiteren Absaugleitung (234) verbunden ist.

5. System nach Anspruch 4, dadurch gekennzeichnet, dass ein Venturi-Injektionsglied (228) im Leitungszug in der ersterwähnten Absaugleitung (227) vorgesehen ist, um einen Differentialdruck zwischen der Niederschlagskammer (10) und der ersten Leitung zu erzeugen.

6. System nach Anspruch 5, dadurch gekennzeichnet, dass ein anderes Injektions-Venturi-Glied (236) im Leitungszug in der anderen Absaugleitung (224) gelegen ist, um den Druck (P1) in der Niederschlagskammer (10) einzustellen.

7. System nach Anspruch 6, dadurch gekennzeichnet, dass ein weiteres Venturi-Glied (238) in der anderen Leitung (234) vorgesehen ist, um die Gesamtdrücke im Absaugsystem zu steuern.

8. System nach Anspruch 1, dadurch gekennzeichnet, dass das Absaugrohr (226) auf der Seite des Sootkörpers (302) gegenüber einem Brenner (112) angeordnet ist, der gasförmige Reaktanten auf den Sootkörper richtet.

9. System nach Anspruch 8, dadurch gekennzeichnet, dass das sich konisch erweiternde Einlassende (244) des Absaugrohrs (226) dicht benachbart zum Ende des Sootkörpers (302) angeordnet ist.

## Revendications

1. Un système d'évacuation pour évacuer de la suie à partir d'une chambre de dépôt (10) dans laquelle on doit former un barreau de suie pour guide de lumière, par dépôt axial en phase vapeur, le système d'évacuation comprenant un tube d'évacuation pratiquement cylindrique (226) qui est raccordé à la chambre de dépôt, charactérisé en ce que le tube d'évacuation comporte une extrémité d'entrée évasée (244), avec une lèvre tournée progressivement vers l'arrière qui s'étend dans la chambre, une extrémité de sortie (242) qui est raccordée à une extrémité (249) d'un conduit d'évacuation (227), et une partie rétrécie ou col (246) entre l'extrémité d'entrée et l'extrémité de sortie.

2. Un système selon la revendication 1, caractérisé en ce qu'une chambre de receuil de suie (232) est raccordée à l'autre extrémité du conduit d'évacuation (227) et la chambre de recueil isole la chambre de dépôt (10) vis-à-vis de fluctiations de pression en aval.

3. Un système selon la revendication 2, caractérisé en ce que la chambre de recueil (232) comprend un ensemble de pièces tubulaires (266, 268) qui sont montées de façon concentrique en étant positionnées longitudinalement de façon à établir un chemin d'évacuation sinueux.

4. Un système selon la revendication 3, caractérisé en ce que la partie de sortie (262, 264) de la chambre de recueil (232) est raccordée à un autre conduit d'évacuation (234).

5. Un système selon la revendication 4, caractérisé en ce qu'un venturi à injection en ligne (228) est incorporé dans le conduit d'évacuation mentionné en premier (227) pour établir une pression différentielle entre la chambre de dépôt (10) et le premier conduit.

6. Un système selon la revendication 5, caractérisé en ce qu'un autre venturi à injection en ligne (236) est incorporé dans l'autre conduit d'évacuation (234) dans le but d'ajuster la pression (P1) dans la chambre de dépôt (10).

7. Un système selon la revendication 6, caractérisé en ce qu'un venturi supplémentaire (238) est incorporé dans cet autre conduit (234) pour commander les pressions globales dans le système d'évacuation.

8. Un système selon la revendication 1, caractérisé en ce que le tube d'évacuation (226) est placé du côté du barreau de suie (302) qui est opposé à un chalumeau (112) destiné à projeter des gaz réactifs sur le barreau de suie.

9. Un système selon la revendication 8, caractérisé en ce que l'extrémité d'entrée évasée (244) du tube d'évacuation (226) est placée en une position immédiatement adjacente à l'extrémité du barreau de suie (302).

0 178 032

FIG.-1

7

FIG.-2

FIG.-3

FIG.-4

FIG.-5

FIG-6

FIG-9

FIG-8

FIG-7

FIG.-10

0178032

FIG.-11

FIG.-12

17